# EUROPÄISCHE PATENTSCHRIFT

(11) **EP 0 937 673 B1**
(45) Veröffentlichungstag und Bekanntmachung des Hinweises auf die Patenterteilung: **18.07.2001**
(21) Anmeldenummer: 99102935.6
(22) Anmeldetag: 13.02.1999
(51) Int. Cl.: B65H 29/02

(54) **Verfahren und Vorrichtung zur Bewegung von Greiferstangen in einer bogenverarbeitenden Maschine**
Method of and device for moving gripper bars in a sheet handling machine
Procédé et dispositif pour déplacer des barres à pinces dans une machine de traitement de feuilles

(30) Priorität: 23.02.1998 DE 19807587
(43) Veröffentlichungstag der Anmeldung: 25.08.1999
(73) Patentinhaber: Vossen, Manfred, 41372 Niederkrüchten-Elmpt (DE)
(72) Erfinder: Vossen, Manfred, 41372 Niederkrüchten-Elmpt (DE)
(74) Vertreter: Bonsmann, Manfred, Dipl.-Ing.

(56) Entgegenhaltungen:
- WO-A-82/01361
- DE-A- 2 324 642
- DE-A- 3 617 916

## Beschreibung

Die Erfindung bezieht sich auf ein Verfahren und eine Vorrichtung zur Bewegung von Greiferstangen für den Vorschub von Bogenmaterial in einer bogenverarbeitenden Maschine mit Oberteile und Unterteile aufweisenden Bearbeitungsstationen, wobei die Greiferstangen in einer zwischen den Ober- und den Unterteilen der Bearbeitungsstationen verlaufenden Vorschubebene taktweise vorgeschoben und anschließend im selben Takt in einer höhenversetzt zu der Vorschubebene liegenden Rückholebene entgegen der Vorschubbewegung zurückgeholt werden.

In bogenverarbeitenden Maschinen werden die einzelnen Bogen von einer Anlage, die eine Einrichtung zum Vereinzeln der unbearbeiteten Bogen eines Bogenstapels und zum ausgerichteten Zuführen der Bogen zu den Greiferstangen aufweist, über verschiedene Bearbeitungsstationen, wie zum Beispiel eine Station zum Stanzen und/oder Prägen der Bogen sowie eine Station zum Ausbrechen bzw. Entfernen des inneren Abfalls aus den gestanzten Bogen, zu einem Ablagestapel intermittierend, taktweise transportiert. Die Bearbeitungsstationen sind dabei aus einem Oberteil und einem Unterteil gebildet, zwischen denen die Greiferstangen die Bogen hindurchführen. Es ist bekannt, die Greiferstangen an umlaufenden Ketten zu befestigen und entweder oberhalb der Oberteile (z.B. DE 23 24 642 A) oder unterhalb der Unterteile vom Ablagestapel zur Anlage zurückzuführen.

Die Maschinen sind mit einer Verkleidung versehen, beispielsweise aus Sicherheits- oder Lärmschutzgründen, in der Fenster angeordnet sind, um Einrichte- und Zurichtearbeiten durchführen und die laufende Produktion beobachten zu können. Für die Einrichte- und Zurichtearbeiten muß der Maschinenbediener mit dem Oberkörper vor allem im Bereich des Ausbrechers und der Ablage durch die Fenster hindurch in die Maschine gelangen können. Die meisten Arbeiten fallen dabei oberhalb der Vorschubebene der Greiferstangen an, in geringerem Umfange sind allerdings auch Arbeiten unterhalb der Vorschubebene erforderlich. Die Größe der Fenster wird in Vorschubrichtung durch den Abstand der Bearbeitungsstationen bzw. der Ablage zueinander und in vertikaler Richtung durch den Abstand der oberen bzw. der unteren Kettenführung zur Vorschubebene bestimmt. Der Abstand der Bearbeitungsstationen bzw. der Ablage zueinander entspricht dem Abstand der Greiferstangen untereinander, der aus maschinendynamischen Gründen minimal zu halten ist. Das hat zur Folge, daß bei Maschinen für kleinere Bogenformate, kleiner als etwa 1 m x 0,7 m, die Fenster so klein werden, daß der Maschinenbediener sich nicht mehr hindurchbeugen und damit nicht mehr die notwendigen Arbeiten innerhalb der Maschine ausführen kann. Darüberhinaus ist, wenn die Greiferstangen oberhalb der Oberteile zurückgeführt werden, der obere Stanzkopf in der Höhe begrenzt, da er zwischen den umlaufenden Ketten angeordnet sein muß. Hinsichtlich der Wahl des Antriebsprinzips für den Stanzkopf hat dies starke Beschränkungen zur Folge.

Das gleiche gilt für den unteren Stanzkopf, falls die Greiferstangen unterhalb der Unterteile zurückgeführt werden. Hierbei ist darüberhinaus von Nachteil, daß die Höhe der fertigen Bogenstapel stark begrenzt ist. Zuschnittstapel größerer Höhe sind jedoch zur wirtschaftlichen Weiterverarbeitung der Zuschnitte von großer Wichtigkeit. Müssen höhere Stapel aus kleinen Stapeln zusammengesetzt werden, sind hierfür weitere Vorrichtungen notwendig, wodurch der Aufwand hinsichtlich Kosten, Platzbedarf und Arbeitszeit erhöht wird. Da die Ketten um den Ablagestapel herumlaufen und diese im Non-Stop-Betrieb, d. h. bei laufender Maschine, entfernt werden müssen, können die Ablagestapel nur noch seitlich aus der Maschine entnommen werden. Raumnot am Aufstellort oder Verknüpfungen der Maschine mit nachfolgenden Maschinen können allerdings erfordern, daß die fertigen Stapel in Vorschubrichtung der Bogen entfernt werden. Außerdem ist durch die unten umlaufenden Ketten eine Abfallentsorgung im Ausbrecher und in der Ablage auf direktem Wege, d. h. durch Durchbrüche im Boden hindurch in einen Container oder LKW, unmöglich.

Die Aufgabe der vorliegenden Erfindung liegt darin, ein Verfahren und eine Vorrichtung der eingangs genannten Art auf einfache und kostengünstige Weise zu verbessern, daß insbesondere die Bearbeitung von kleineren Bogenformaten einfacher und kostengünstiger wird.

Erfindungsgemäß wird diese Aufgabe bei einem gattungsgemäßen Verfahren dadurch gelöst, daß die Greiferstangen zwischen den Oberteilen und den Unterteilen der Bearbeitungsstationen der bogenverarbeitenden Maschine zurückgeholt werden, wobei die Vorschubebene nicht mit der Rückholebene verbunden wird, und daß die Greiferstangen nach Beendigung der Vorschubbewegung von der Vorschubebene auf die Rückholebene gesetzt und nach Beendigung der Rückholbewegung von der Rückholebene auf die Vorschubebene gesetzt werden.

Bei einer Vorrichtung zur Durchführung dieses Verfahrens, wobei die bogenverarbeitende Maschine eine Anlage zur Zuführung des zu bearbeitenden Bogenmaterials, Bearbeitungsstationen und eine Ablage für das bearbeitete Bogenmaterial aufweist, die nacheinander mit gleichem Abstand voneinander angeordnet sind, sind erfindungsgemäß in der Vorschubebene und in der Rückholebene jeweils mindestens eine in Bewegungsrichtung der Greiferstangen verlaufende Vorschubstange angeordnet, die mit den Greiferstangen lösbar in Eingriff bringbar ist und hierfür im Abstand der Bearbeitungsstationen angeordnete Aufnahmeeinrichtungen aufweist, deren Anzahl um eine größer ist als die der Bearbeitungsstationen, sind ferner Antriebseinrichtungen vorgesehen, die die Vorschubstangen zueinander gegenläufig synchron zwischen einer Endlage in der Nähe der Anlage und einer Endlage in der Nähe der Ablage um den Abstand der Bearbeitungsstationen taktweise bewegen, wobei die mindestens eine Vorschubstange der Vorschubebene während der Bewegung zur Ablage hin und die mindestens eine Vorschubstange der Rückholebene während der Bewegung zur Anlage hin mit den Greiferstangen in Eingriff und während der Bewegung in die jeweils andere Richtung mit diesen außer Eingriff sind, und sind in den Endlagenbereichen der Vorschubstangen Höhenverstelleinrichtungen zur Durchführung einer Höhenverstellung der Greiferstangen zwischen der Vorschubebene und der Rückholebene vorgesehen.

Durch die erfindungsgemäßen Maßnahmen wird der Zugang zu den Arbeitselementen der Maschine erleichtert, da weder oberhalb der Oberteile noch unterhalb der Unterteile der Bearbeitungsstationen Bauteile für den Transport der Greiferstangen vorhanden sind. Der Ablagestapel liegt frei und kann wahlweise seitlich oder nach hinten, d. h. in Vorschubrichtung des Bogenmaterials, aus der Maschine entfernt werden. Der im Ausbrecher und in der Ablage anfallende Abfall kann ohne weiteres nach unten entsorgt werden.

Dadurch, daß die Greiferstangen nicht mehr mit hoher Geschwindigkeit durch die engen Radien von Kettenumlenkungen, wie bei den herkömmlichen Maschinen gezwängt werden und somit keine Fliehkräfte quer zur Transportrichtung auf die Greiferstangen wirken, kann die Höhe der Greiferstangen flacher als bei Greiferstangen für die herkömmlichen Maschinen gehalten werden. Die Greiferstangen können so flach ausgebildet werden, daß das Gesamtmaß der beiden übereinander transportierten Greiferstangen das Höhenmaß der Greiferstangen von herkömmlichen Maschinen nicht übersteigt. Damit ist sichergestellt, daß beim gegenläufigen Durchfahren der Greiferstangen durch die offenen Bearbeitungswerkzeuge keine Nachteile in bezug auf die Hubverhältnisse der Bearbeitungsstationen auftreten.

Vorteilhafterweise werden die Greiferstangen mit einer translatorischen Bewegung von der Vorschubebene auf die Rückholebene und von der Rückholebene auf die Vorschubebene gesetzt. Hierdurch wird der maschinelle Aufwand und auch der Platzbedarf der Maschine weiter verringert, da weder eine Vorrichtung noch der Freiraum für eine Drehung der Greiferstangen vorgesehen werden muß.

In vorteilhafter Weiterbildung der Erfindung verlaufen die Vorschubebene und die Rückholebene zueinander parallel. Günstig ist es auch, wenn die Greiferstangen linear bewegt werden. Alle diese Maßnahmen tragen zur weiteren Reduzierung des maschinellen Aufwandes und des Platzbedarfes bei.

Bei einer bevorzugten Ausführungsform der Erfindung erstrecken sich die Greiferstangen quer zu ihrer Bewegungsrichtung und sind in der Vorschubebene und in der Rückholebene jeweils zwei Vorschubstangen angeordnet, die mit Abstand zueinander parallel verlaufen und einander zugewandte Aufnahmeeinrichtungen aufweisen, die mit den Stirnendbereichen der Greiferstangen in Eingriff bringbar sind. Hierdurch wird die Führungs- und Positioniergenauigkeit der Greiferstangen erhöht.

Bevorzugt sind die Aufnahmeeinrichtungen der in der Vorschubebene vorgesehenen Vorschubstangen und die Aufnahmeeinrichtungen der in der Rückholebene vorgesehenen Vorschubstangen jeweils in Längsrichtung der Vorschubstangen gegeneinander versetzt angeordnet. Dieser Versatz ist notwendig, um in den Bearbeitungsstationen, wie zum Beispiel in der Stanze, dem Ausbrecher oder der Ablage, Platz für die erforderlichen Werkzeugrahmen zu schaffen.

Eine besonders einfache Ausgestaltung einer erfindungsgemäßen Vorrichtung ergibt sich, wenn die Aufnahmeeinrichtungen als Ausnehmungen ausgebildet sind.

In einer günstigen Weiterbildung der Erfindung sind Arretiereinrichtungen vorgesehen, die die Greiferstangen dann arretieren, wenn diese außer Eingriff mit den Vorschubstangen sind. Dabei arretieren die Arretiereinrichtungen die Greiferstangen vorzugsweise in den Bearbeitungsstationen und weisen die Arretiereinrichtung ganz besonders bevorzugt Indexbolzen auf, um die herum die Greiferstangen um ein vorgegebenes Maß kippbar sind. Mit diesen Maßnahmen werden die Greiferstangen örtlich zu den Bearbeitungsstationen fixiert, wenn sie mit den Vorschubstangen außer Eingriff sind und diese leer zwischen den Greiferstangen bewegt werden. Ohne diese Fixierung hätten die Greiferstangen keine definierte Position, was in den Bearbeitungsstationen zu einer ungenauen Bearbeitung führen würde.

In weiterer Ausgestaltung der Erfindung sind die Vorschubstangen um ihre Längsachsen verkippbar bzw. verschwenkbar gelagert und erfolgt das Verbinden bzw. das Lösen der Greiferstangen mit bzw. von den Vorschubstangen durch deren Verschwenken. Hierdurch werden die Greiferstangen auf einfache Weise mit den Vorschubstangen in oder außer Eingriff gebracht.

Ganz besonders bevorzugt weisen dabei die Vorschubstangen im Querschnitt gesehen ein Propellerprofil mit zwei einander gegenüberliegenden Einzelflügeln auf und sind in den auf der einen Seite der Vorschubstangen vorgesehenen Flügeln die Ausnehmungen zur Aufnahme der Stirnendbereiche der Greiferstangen vorgesehen und ist in den auf der anderen Seite vorgesehenen Flügeln jeweils wenigstens eine Ausnehmung zum Einfassen eines Antriebselementes für die Vorschubstangenlängsbewegung vorgesehen.

Die Erfindung wird nachfolgend anhand der Zeichnungen beispielshalber noch näher erläutert. Es zeigen:
- Fig. 1: in schematischer Darstellung eine Seitenansicht einer erfindungsgemäßen Vorrichtung;
- Fig. 2: in schematischer Darstellung eine Perspektivansicht der Vorrichtung aus Fig. 1, wobei die beiden mittleren Bearbeitungsstationen weggelassen sind und die Anordnung der Greiferstangen in der Vorschubebene und in der Rückholebene dargestellt ist;
- Fig. 3: in schematischer Darstellung eine Perspektivansicht der Verbindung zwischen Greiferstangen und Vorschubstangen;
- Fig. 4: in schematischer Darstellung eine Querschnittsansicht quer zur Vorschubrichtung durch die Vorschubebene und die Rückholebene; und
- Fig. 5: eine schematische Darstellung arretierter Greiferstangen.

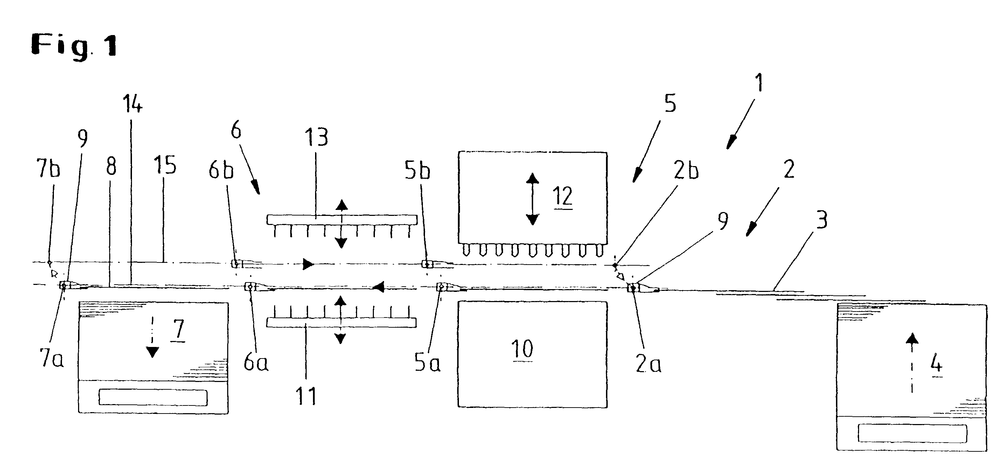

In Fig. 1 ist als Beispiel eine bogenverarbeitende Maschine 1 dargestellt, die eine Anlage 2 zur Zuführung des zu bearbeitenden, vereinzelten Bogenmaterials 3 von einem unbearbeiteten Bogenstapel 4, zwei Bearbeitungsstationen, nämlich eine Stanze 5 und einen Ausbrecher 6, sowie eine Ablage 7 für das bearbeitete Bogenmaterial 8 aufweist. Die Anlage 2, die Bearbeitungsstationen 5, 6 und die Ablage 7 sind in solchen Abständen hintereinander angeordnet, daß zugehörige Haltepunkte 2a, 5a, 6a, 7a, 2b, 5b, 6b, 7b für Greiferstangen 9 gleiche Abstände zueinander aufweisen. Die Stanze 5 und der Ausbrecher 6 weisen jeweils ein Unterteil 10, 11 und ein Oberteil 12, 13 auf, die zum Teil aufwärts und abwärts bewegbar sind und zwischen denen das Bogenmaterial 3 hindurchläuft.

Zum Transport des Bogenmaterials 3 durch die Maschine 1 werden Greiferstangen 9 eingesetzt, die im dargestellten Beispiel quer zur Transportrichtung verlaufen, das unbearbeitete Bogenmaterial 3 in der Anlage 2 ergreifen und in einer Vorschubebene 14 taktweise von Bearbeitungsstation 5 zu Bearbeitungsstation 6 bis hin zur Ablage 7 vorschieben. Nachdem eine Greiferstange 9 das bearbeitete Bogenmaterial 8 in der Ablage 7 abgelegt hat, wird sie auf eine über der Vorschubebene 14, ebenfalls zwischen den Unterteilen 10, 11 und den Oberteilen 12, 13 der Bearbeitungsstationen 5, 6 verlaufende Rückholebene 15 angehoben und in dieser im selben Takt wieder zur Anlage 2 zurückgeholt, wo sie von der Rückholebene 15 auf die Vorschubebene 14 abgesenkt wird und dabei in der Anlage 2 wieder einen Bogen 3 ergreift.

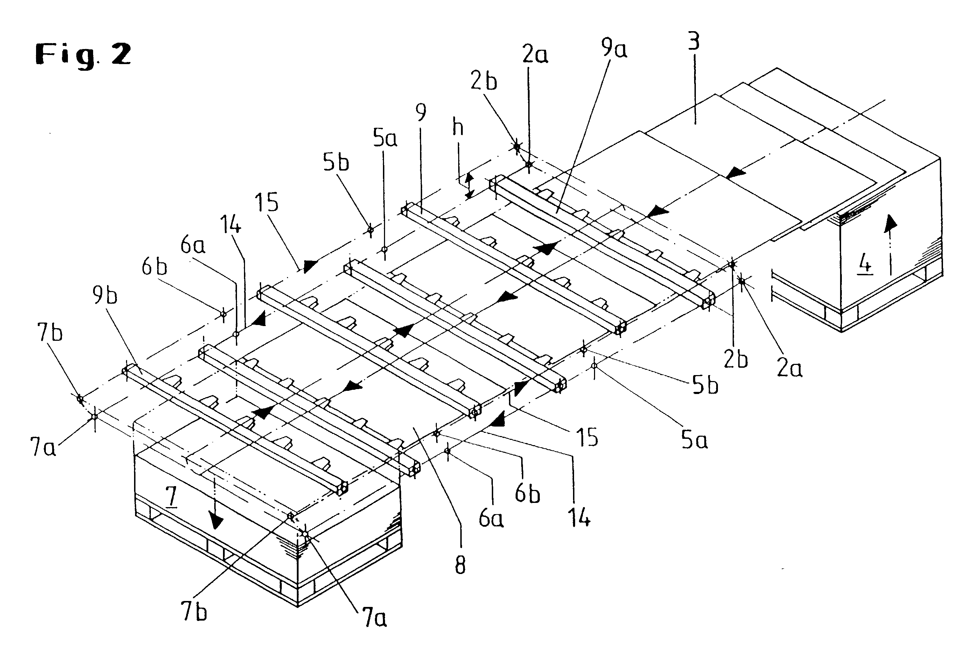

In Fig. 2 ist der Bewegungsablauf der Greiferstangen 9 in der Maschine 1 dargestellt, wobei der Übersichtlichkeit halber die Bearbeitungsstationen 5, 6 weggelassen sind und die entsprechenden Abstände, um die die Greiferstangen 9 taktweise vorgeschoben bzw. rückgeholt werden, durch die zugehörigen Haltepunkte markiert 2a, 5a, 6a, 7a, 2b, 5b, 6b, 7b sind. Eine in der Vorschubebene 14 befindliche Greiferstange 9a hat in der Anlage 2 in einem ersten Takt einen Bogen 3 ergriffen und ist auf dem Weg zur ersten Bearbeitungsstation 5. Die beiden Greiferstangen 9, die in den beiden Bearbeitungsstationen 5, 6 gehalten haben, werden mit jeweils einem Bogen zur nächsten Bearbeitungsstation 6 bzw. zur Ablage 7 vorgeschoben. Die in der Nähe der Ablage 7 befindliche Greiferstange 9b hat ihren fertigen Bogen 8 bereits in der Ablage 7 abgelegt und wurde von der Vorschubebene 14 auf die Rückholebene 15 angehoben. In der Rückholebene 15 befinden sich schon zwei weitere Greiferstangen 9 auf dem Rückweg zur Anlage 2, eine kurz hinter dem Haltepunkt 6b für die zweite Bearbeitungsstation 6 und eine kurz hinter dem Haltepunkt 5b für die erste Bearbeitungsstation 5. Im nächsten Takt werden die Greiferstangen 9 jeweils bis zum nächsten Haltepunkt vorgeschoben, d. h. die Greiferstange 9a, die z. B. im ersten Takt von der Anlage 2 zur ersten Bearbeitungsstation 5 vorgeschoben wurde, wird im zweiten Takt zur zweiten Bearbeitungsstation 6 vorgeschoben usw.

Die Vorschubebene 14 und die Rückholebene 15 sind nicht miteinander verbunden und verlaufen über ihre gesamte Länge hinweg parallel zueinander, wobei die Rückholebene 15 zur Vorschubebene 14 höhenversetzt ist und im dargestellten Ausführungsbeispiel um einen Betrag h über der Vorschubebene 14 liegt. Die Greiferstangen 9 werden linear von der Anlage 2 zur Ablage 7 und zurück bewegt.

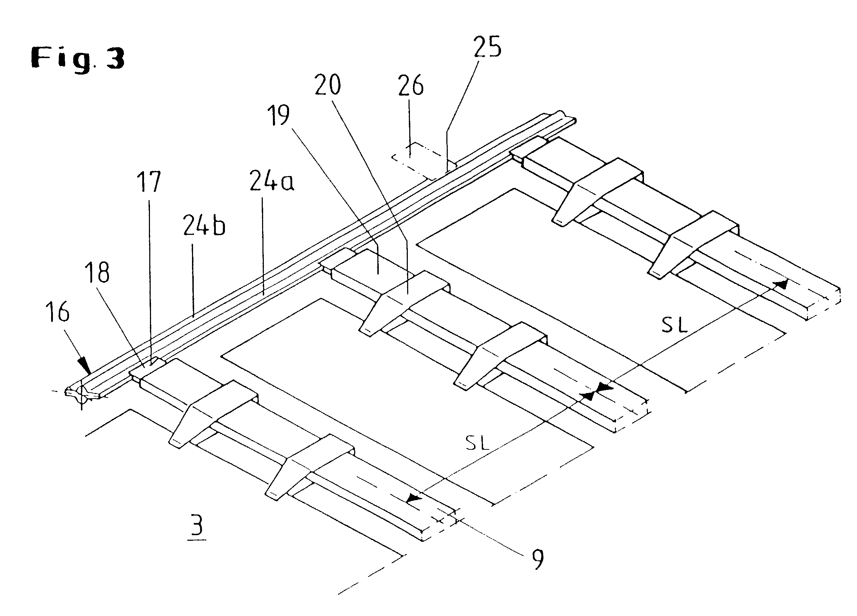

Wie aus Fig. 3 ersichtlich ist, sind zum Vorschieben bzw. Rückholen der Greiferstangen 9 kammartig ausgebildete Förder-bzw. Vorschubstangen 16 vorgesehen, die sich in Bewegungsrichtung der Greiferstangen 9 erstrecken. In der Vorschubebene 14 und in der Rückholebene 15 sind jeweils zwei Vorschubstangen 16 angeordnet, die mit Abstand zueinander parallel verlaufen und einander zugewandte Aufnahmeeinrichtungen aufweisen, die im dargestellten Ausführungsbeispiel als Ausnehmungen 17 ausgebildet sind. Die Greiferstangen 9 verlaufen quer zu ihrer Bewegungsrichtung bzw. zur Vorschubrichtung des Bogenmaterials 3, 8 und können mit ihren Stirnendbereichen 18 in die Ausnehmungen 17 der Vorschubstangen 16 eingreifen, wobei in Fig. 3 der zweite Stirnendbereich der Greiferstangen 9 sowie die zweite Vorschubstange der Ebene nicht dargestellt sind. Die Ausnehmungen 17 jeder Vorschubstange 16 sind im Abstand der Bearbeitungsstationen voneinander angeordnet, wobei eine Ausnehmung 17 mehr vorgesehen ist, als Bearbeitungsstationen 5, 6 vorhanden sind. Die Vorschubstangen 16 erfassen im dargestellten Beispiel jeweils drei Greiferstangen 9 gleichzeitig. Während die Vorschubstangen 16 der Vorschubebene 14 drei Greiferstangen 9 um eine Systemlänge SL bzw. einen Bearbeitungsstationen-Abstand in Richtung Ablage 7 transportieren, werden von den Vorschubstangen 16 der Rückholebene 15 drei Greiferstangen 9 in Richtung Anlage 2 transportiert.

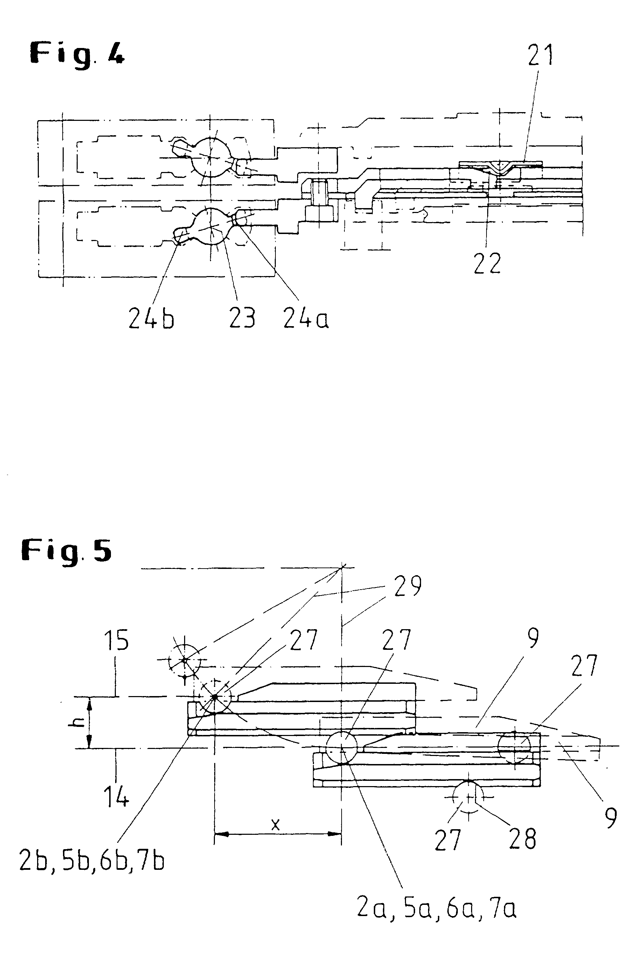

Die Greiferstangen 9 weisen einen sich quer zur Vorschubrichtung bzw. zu den Vorschubstangen 16 erstreckenden Träger 19 auf, an dem mehrere, mit Abstand zueinander angordnete Greifer 20 angebracht sind, die das Bogenmaterial 3, 8 ergreifen. Die Höhe der Greiferstangen 9 beträgt weniger als die Hälfte der Höhe der in den bekannten bogenverarbeitenden Maschinen verwendeten Greiferstangen, so daß die Gesamthöhe der übereinander angeordneten Greiferstangen 9 der Vorschubebene 14 und der Rückholebene 15 nicht größer als die der Höhe der in den vorbekannten bogenverarbeitenden Maschinen eingesetzten Greiferstangen ist und so keine Probleme hinsichtlich der Hubhöhen der Bearbeitungsstationen entstehen. Die Greifer 20 weisen eine Blattfeder 21 auf, die durch eine Schiebestange 22 angehoben werden kann, um den Greifer 20 in eine Offenstellung zu bringen (vgl. strichpunktierte Stellung in Fig. 4).

Beim Einlauf in die Ablage 7 werden die Greifer 20 der Greiferstange 9 durch z. B. eine (nicht dargestellte) Auflaufkurve zentral geöffnet. Auf diese Weise kann beim Anheben der in der Ablage 7 befindlichen Greiferstange 9b auf die Rückholebene 15 und bei der damit verbundenen Rückholbewegung in Richtung auf die letzte, im dargestellten Beispiel die zweite, Bearbeitungsstation 6 der Bogen 8 aus den offenen Greifern 20 durch (nicht dargestellte) Ausstreifer ausgestreift werden.

In der Rückholebene 15 werden die Greiferstangen 9 mit offenen Greifern 20 zur Anlage 2 zurückgeholt, so daß beim Absenken von der Rückholebene 15 in die Vorschubebene 14 die offenen Greifer 20 die in der Anlage 2 liegenden, schon ausgerichteten Bogen 3 an den vorderen Rändern umgreifen. Der zeitliche Ablauf der Bogenanlage kann hierdurch effektiver gestaltet werden. Anschließend werden die Greifer 20 durch eine gesteuerte Einrichtung zentral geschlossen, wobei die Bogen 3 von den Greiferstangen 9 lagegerecht erfaßt sind.

Der Mechanismus, mit dem die Vorschubstangen 16 und die Greiferstangen 9 für einen Transporthub miteinander in Eingriff oder für einen Leerhub in die andere Richtung außer Eingriff gebracht werden, ist in Fig. 4 dargestellt. Die Vorschubstangen 16 sind um ihre Längsachsen 23 verschwenkbar gelagert und werden mit den Greiferstangen 9 in Eingriff oder mit diesen außer Eingriff gebracht, indem die Vorschubstangen 16 zwischen einer Stellung, in der sie mit den Greiferstangen 9 in Eingriff sind, und einer zweiten Stellung verschwenkt werden, in der sie mit den Greiferstangen 9 außer Eingriff sind. Die Vorschubstangen 16 weisen zwei einander gegenüberliegende Einzelflügel 24a, 24b auf -ähnlich einem Propeller-, wobei ein Flügel 24a den Greiferstangen 9 zugewandt ist. In diesem Flügel 24a sind die Ausnehmungen 17 zur Aufnahme der Stirnendbereiche 18 der Greiferstangen 9 vorgesehen. In dem Flügel 24b auf der anderen, gegenüberliegenden Seite ist wenigstens eine Ausnehmung 25 vorgesehen, in die ein Antriebselement 26 einer (nicht dargestellten) Antriebseinrichtung einfassen kann (Fig. 3), das die Vorschubstangen 16 längs ihrer Längsachse zu einer Hin- und Herbewegung antreibt. Als Antriebseinrichtung kann ein Doppelkurven-Getriebe vorgesehen werden, wobei als Übertragungsmittel vom Getriebe zu den Vorschubstangen Ketten, Zahnriehmen, Stahlbinder, Zahnstangen und dergleichen denkbar sind.

In Fig. 5 ist die Anordnung einer in einer Bearbeitungsstation befindlichen Greiferstange 9 der Vorschubebene 14 zu einer benachbarten Greiferstange 9 in der Rückholebene 15 dargestellt. Wie auch aus Fig. 2 ersichtlich ist, sind die Haltepunkte 2b, 5b, 6b, 7b der Greiferstangen 9 der Rückholebene 15 zu den Haltepunkten 2a, 5a, 6a, 7a der Greiferstangen 9 der Vorschubebene 14 um das Maß x in Richtung Ablage 7 versetzt. Dieser Versatz x ist notwendig, um in den Bearbeitungsstationen 5, 6 sowie in der Ablage 7 Platz für die erforderlichen Werkzeugrahmen zu schaffen. Wenn die Vorschubstangen 16 und die Greiferstangen 9 nicht miteinander in Eingriff sind, werden die Greiferstangen 9 durch Indexbolzen 27 örtlich fixiert, um insbesondere zu den Bearbeitungsstationen eine definierte Position während der Bearbeitung einzuhalten. Es können Indexbolzen 27 vorgesehen werden, die entweder nur die Greiferstange 9 der Vorschubebene 14 oder nur die Greiferstange 9 der Rückholebene 15 arretieren, wobei die Greiferstangen 9 entsprechende Aussparungen 28 für die Indexbolzen 27 aufweisen. Es ist aber auch vorgesehen, daß ein Indexbolzen 27 zwischen die obere und die untere Greiferstange 9 geschoben wird und hierdurch beide gleichzeitig fixiert. Erst wenn die Greiferstangen 9 durch die Indexbolzen 27 arretiert sind, werden die Greiferstangen 9 von den Vorschubstangen 16 abgekuppelt und machen die Vorschubstangen 16 einen Leerhub um eine Systemlänge SL bzw. um einen Abstand zwischen den Bearbeitungsstationen in Richtung Anlage 2 im Fall der Vorschubebene 14 und in Richtung Ablage 7 im Fall der Rückholebene.

Mit Beginn des Leerhubes wird die in der Ablage 7 befindliche Greiferstange 9b durch eine (nur angedeutete) Schwenkvorschub-Einrichtung 29 um den Betrag x noch einmal in Vorschubrichtung bewegt und dabei im einen Betrag h auf die Rückholebene 15 angehoben, während die in der Anlage 2 befindliche Greiferstange 9 durch eine zweite Schwenkvorschub-Einrichtung um den Betrag x weiter zurückbewegt und dabei gleichzeitig um den Betrag h auf die Vorschubebene 14 abgesenkt wird.

In den Bearbeitungsstationen, d. h. in der Stanze 5 und im Ausbrecher 6, sowie in der Ablage 7 werden die Greiferstangen 9 durch (nicht dargestellte) Schwenkeinrichtungen um die als Drehachsen dienenden Indexbolzen 27 gegen federnde Schienenstücke um ein vorgegebenes Maß geringfügig gekippt, so daß die Greifer 20 auf Bearbeitungsniveau abgesenkt werden. Nach erfolgter Bearbeitung wird dieser Vorgang wieder umgekehrt.

## Patentansprüche

1. Verfahren zur Bewegung von Greiferstangen für den Vorschub von Bogenmaterial in einer bogenverarbeitenden Maschine mit Oberteile und Unterteile aufweisenden Bearbeitungsstationen, bei dem die Greiferstangen in einer zwischen den Ober- und den Unterteilen der Bearbeitungsstationen verlaufenden Vorschubebene taktweise vorgeschoben und anschließend im selben Takt in einer höhenversetzt zu der Vorschubebene liegenden Rückholebene entgegen der Vorschubbewegung zurückgeholt werden, dadurch gekennzeichnet, daß die Greiferstangen (9) zwischen den Oberteilen (12, 13) und den Unterteilen (10, 11) der Bearbeitungsstationen (5, 6) zurückgeholt werden, wobei die Vorschubebene (14) nicht mit der Rückholebene (15) verbunden wird, und daß die Greiferstangen (9) nach Beendigung der Vorschubbewegung von der Vorschubebene (14) auf die Rückholebene (15) gesetzt und nach Beendigung der Rückholbewegung von der Rückholebene (15) auf die Vorschubebene (14) gesetzt werden.

2. Verfahren nach Anspruch 1, dadurch gekennzeichnet, daß die Greiferstangen (9) mit einer translatorischen Bewegung von der Vorschubebene (14) auf die Rückholebene (15) und von der Rückholebene (15) auf die Vorschubebene (14) gesetzt werden.

3. Verfahren nach Anspruch 1 oder 2, dadurch gekennzeichnet, daß die Vorschubebene (14) und die Rückholebene (15) parallel zueinander angeordnet werden.

4. Verfahren nach einem der Ansprüche 1 bis 3, dadurch gekennzeichnet, daß die Greiferstangen (9) linear bewegt werden.

5. Vorrichtung zur Durchführung des Verfahrens nach einem der Ansprüche 1 bis 4, wobei die bogenverarbeitende Maschine (1) eine Anlage (2) zur Zuführung des zu bearbeitenden Bogenmaterials (3), Bearbeitungsstationen (5, 6) und eine Ablage (7) für das bearbeitete Bogenmaterial (8) aufweist, die nacheinander mit gleichem Abstand voneinander angeordnet sind, dadurch gekennzeichnet, daß in der Vorschubebene (14) und in der Rückholebene (15) jeweils mindestens eine in Bewegungsrichtung der Greiferstangen (9) verlaufende Vorschubstange (16) angeordnet ist, die mit den Greiferstangen (9) lösbar in Eingriff bringbar ist und hierfür im Abstand der Bearbeitungsstationen (5, 6) angeordnete Aufnahmeeinrichtungen (17) aufweist, deren Anzahl um eine größer ist als die der Bearbeitungsstationen (5, 6), daß ferner Antriebseinrichtungen vorgesehen sind, die die Vorschubstangen (16) zueinander gegenläufig synchron zwischen einer Endlage in der Nähe der Anlage (2) und einer Endlage in der Nähe der Ablage (7) um den Abstand der Bearbeitungsstationen taktweise hin- und herbewegen, wobei die mindestens eine Vorschubstange (16) der Vorschubebene (14) während der Bewegung zur Ablage (7) hin und die mindestens eine Vorschubstange (16) der Rückholebene (15) während der Bewegung zur Anlage (2) hin mit den Greiferstangen (9) in Eingriff und während der Bewegung in die jeweils andere Richtung mit diesen außer Eingriff sind, und daß in den Endlagenbereichen der Vorschubstangen (16) Höhenverstelleinrichtungen (29) zur Durchführung einer Höhenverstellung der Greiferstangen (9) zwischen der Vorschubebene (14) und der Rückholebene (15) vorgesehen sind.

6. Vorrichtung nach Anspruch 5, dadurch gekennzeichnet, daß sich die Greiferstangen (9) quer zu ihrer Bewegungsrichtung erstrecken und in der Vorschubebene (14) und in der Rückholebene (15) jeweils zwei Vorschubstangen (16) angeordnet sind, die mit Abstand zueinander parallel verlaufen und einander zugewandte Aufnahmeeinrichtungen (17) aufweisen, die mit den Stirnendbereichen (18) der Greiferstangen (9) in Eingriff bringbar sind.

7. Vorrichtung nach Anspruch 6, dadurch gekennzeichnet, daß die Aufnahmeeinrichtungen (17) der in der Vorschubebene (14) vorgesehenen Vorschubstangen (16) und die Aufnahmeeinrichtungen (17) der in der Rückholebene (15) vorgesehenen Vorschubstangen (16) jeweils in Längsrichtung der Vorschubstangen (16) gegeneinander versetzt angeordnet sind.

8. Vorrichtung nach Anspruch 6 oder 7, dadurch gekennzeichnet, daß die Aufnahmeeinrichtungen als Ausnehmungen (17) ausgebildet sind.

9. Vorrichtung nach einem der Ansprüche 5 bis 8, dadurch gekennzeichnet, daß Arretiereinrichtungen (27) vorgesehen sind, die die Greiferstangen (9) dann arretieren, wenn diese außer Eingriff mit den Vorschubstangen (16) sind.

10. Vorrichtung nach Anspruch 9, dadurch gekennzeichnet, daß die Arretiereinrichtungen Indexbolzen (27) aufweisen, um die herum die Greiferstangen (9) um ein vorgegebenes Maß kippbar sind.

11. Vorrichtung nach einem der Ansprüche 5 bis 10, dadurch gekennzeichnet, daß die Vorschubstangen (16) um ihre Längsachsen (23) verschwenkbar gelagert sind und das Verbinden bzw. das Lösen der Greiferstangen (9) mit bzw. von den Vorschubstangen (16) durch deren Verschwenken erfolgt.

12. Vorrichtung nach einem der Ansprüche 8 bis 11, dadurch gekennzeichnet, daß die Vorschubstangen (16) im Querschnitt gesehen ein Propellerprofil mit zwei einander gegenüberliegenden Einzelflügeln (24a, 24b) aufweisen, und daß in den auf der einen Seite der Vorschubstangen (16) vorgesehenen Flügeln (24a) die Ausnehmungen (17) zur Aufnahme der Stirnendbereiche (18) der Greiferstangen (9) vorgesehen sind, und daß in den auf der anderen Seite vorgesehenen Flügeln (24b) jeweils wenigstens eine Ausnehmung (25) zum Einfassen eines Antriebselementes (26) für die Vorschubstangenlängsbewegung vorgesehen ist.

## Claims

1. A method of moving gripper bars for the advance of sheet material in a sheet-processing machine with processing stations having upper portions and lower portions, in which the gripper bars are cyclically advanced in an advance plane extending between the upper and lower portions of the processing stations and are then returned in opposite relationship to the advance movement in the same cycle in a return plane which is in height-displaced relationship with respect to the advance plane, characterised in that the gripper bars (9) are returned between the upper portions (12, 13) and the lower portions (10, 11) of the processing stations (5, 6), wherein the advance plane (14) is not joined to the return plane (15), and that after termination of the advance movement the gripper bars (9) are moved from the advance plane (14) to the return plane (15) and after termination of the return movement they are moved from the return plane (15) to the advance plane (14).

2. A method according to claim 1 characterised in that the gripper bars (9) are moved with a translatory movement from the advance plane (14) to the return plane (15) and from the return plane (15) to the advance plane (14).

3. A method according to claim 1 or claim 2 characterised in that the advance plane (14) and the return plane (15) are arranged parallel to each other.

4. A method according to one of claims 1 to 3 characterised in that the gripper bars (9) are moved linearly.

5. Apparatus for carrying out the method according to one of claims 1 to 4 wherein the sheet-processing machine (1) has a feeder arrangement (2) for feeding the sheet material (3) to be processed, processing stations (5, 6) and a delivery arrangement (7) for the processed sheet material (8), which are arranged in succession at equal spacings from each other, characterised in that arranged in each of the advance plane (14) and the return plane (15) is at least one advance bar (16) which extends in the direction of movement of the gripper bars (9) and which can be releasably brought into engagement with the gripper bars (9) and which for that purpose has receiving devices (17) which are arranged at the spacing of the processing stations (5, 6) and the number of which is greater by one than the number of processing stations (5, 6), that in addition there are provided drive devices which cyclically reciprocate the advance bars (16) synchronously in opposite relationship to each other between an end position in the proximity of the feeder arrangement (2) and an end position in the proximity of the delivery arrangement (7) by the spacing of the processing stations, wherein the at least one advance bar (16) of the advance plane (14) during the movement towards the delivery arrangement (7) and the at least one advance bar (16) of the return plane (15) during the movement towards the feeder arrangement (2) are in engagement with the gripper bars (9) and are out of engagement with them during the movement in the respective other direction, and that provided in the regions of the end positions of the advance bars (16) are height-displacement devices (29) for effecting heightwise displacement of the gripper bars (9) between the advance plane (14) and the return plane (15).

6. Apparatus according to claim 5 characterised in that the gripper bars (9) extend transversely with respect to their direction of movement and arranged in each of the advance plane (14) and the return plane (15) are two advance bars (16) which extend in mutually spaced parallel relationship and have mutually facing receiving devices (17) which can be brought into engagement with the end regions (18) of the gripper bars (9).

7. Apparatus according to claim 6 characterised in that the receiving devices (17) of the advance bars (16) in the advance plane (14) and the receiving devices (17) of the advance bars (16) in the return plane (15) are respectively arranged in mutually displaced relationship in the longitudinal direction of the advance bars (16).

8. Apparatus according to claim 6 or claim 7 characterised in that the receiving devices are in the form of openings (17).

9. Apparatus according to one of claims 5 to 8 characterised in that that there are provided arresting devices (27) which arrest the gripper bars (9) when they are out of engagement with the advance bars (16).

10. Apparatus according to claim 9 characterised in that the arresting devices have index pins (27) about which the gripper bars (9) are tiltable by a predetermined amount.

11. Apparatus according to one of claims 5 to 10 characterised in that the advance bars (16) are mounted pivotably about their longitudinal axes (23) and connection or release of the gripper bars (9) to or from the advance bars (16) is effected by pivotal movement thereof.

12. Apparatus according to one of claims 8 to 11 characterised in that as viewed in cross-section the advance bars (16) have a propeller profile with two mutually oppositely disposed individual blades (24a, 24b) and that provided in the blades (24a) on the one side of the advance bars (16) are the openings (17) for receiving the end regions (18) of the gripper bars (9) and that provided in each of the blades (24b) on the other side is at least one respective opening (25) for engagement therein of a drive element (26) for the longitudinal movement of the advance bars.

## Revendications

1. Procédé pour déplacer des barres à pinces pour faire avancer des feuilles dans une machine traitant des feuilles et comportant des postes de traitement présentant des parties supérieures et des parties inférieures, selon lequel les barres à pinces avancent en cadence dans un plan d'avancement s'étendant entre les parties supérieures et inférieures des postes de traitement, puis sont ramenées en arrière à la même cadence, dans le sens inverse au mouvement d'avancement, dans un plan décalé en hauteur par rapport au plan d'avancement, caractérisé en ce que les barres à pinces (9) sont ramenées en arrière entre les parties supérieures (12, 13) et inférieures (10, 11) des postes de traitement (5, 6), sachant que le plan d'avancement (14) n'est pas relié au plan de retour (15), et en ce que les barres à pinces (9) à la fin du mouvement d'avancement passent du plan d'avancement (14) au plan de retour (15) et à la fin du mouvement de retour, repassent du plan de retour (15) au plan d'avancement (14).

2. Procédé selon la revendication 1, caractérisé en ce que les barres à pinces (9) passent du plan d'avancement (14) au plan de retour (15) et du plan de retour (15) au plan d'avancement (14) avec un mouvement de translation.

3. Procédé selon la revendication 1 ou 2, caractérisé en ce que le plan d'avancement (14) et le plan de retour (15) sont disposés parallèlement entre eux.

4. Procédé selon l'une des revendications 1 à 3, caractérisé en ce que les barres à pinces (9) sont déplacées de manière linéaire.

5. Dispositif pour mettre en oeuvre le procédé selon l'une des revendications 1 à 4, sachant que la machine traitant les feuilles (1) présente une installation (2) pour amener les feuilles à traiter (3), des postes de traitement (5, 6) et un poste de dépôt (7) pour les feuilles traitées (8), qui sont disposés les uns à la suite des autres avec un écart constant, caractérisé en ce qu'au moins une barre d'avancement (16) s'étendant dans la direction de déplacement des barres à pinces (9) est placée dans le plan d'avancement (14) et dans le plan de retour (15), qui peut être mise en prise de façon amovible avec les barres à pinces (9) et qui présente pour ce faire des dispositifs de réception (17) disposés à distance des postes de traitement (5, 6), dont le nombre est égal à celui des postes de traitement (5, 6) plus un, en ce qu'en outre sont prévus des dispositifs d'entraînement qui font aller et venir les barres d'avancement (16) en cadence, en sens inverse l'une par rapport à l'autre, de façon synchronisée entre une position d'extrémité à proximité de l'installation (2) et une position d'extrémité à proximité du poste de dépôt (7) en étant séparées de la distance entre les postes de traitement, sachant qu'au moins l'une des barres d'avancement (16) du plan d'avancement (14) pendant le déplacement vers le poste de dépôt (7) et qu'au moins l'une des barres d'avancement (16) du plan de retour (15) pendant le déplacement vers l'installation (2) sont en prise avec les barres à pinces (9) et, pendant le déplacement en sens inverse, ne sont pas en prise avec ces dernières, et en ce que dans les zones où les barres d'avancement (16) sont en position d'extrémité, des dispositifs pour régler la hauteur (29) sont prévus, qui permettent de régler en hauteur les barres à pinces (9) entre le plan d'avancement (14) et le plan de retour (15).

6. Dispositif selon la revendication 5, caractérisé en ce que les barres à pinces (9) s'étendent transversalement par rapport à leur direction d'avancement, et en ce que deux barres d'avancement (16) sont chaque fois disposées dans le plan d'avancement (14) et dans le plan de retour (15), qui s'étendent parallèlement entre elles avec un écart entre les deux et présentent des dispositifs de réception (17) se faisant face qui peuvent être mis en prise avec les zones d'extrémité frontale (18) des barres à pinces (9).

7. Dispositif selon la revendication 6, caractérisé en ce que les dispositifs de réception (17) des barres d'avancement (16) prévues dans le plan d'avancement (14) sont disposés décalés dans la direction longitudinale des barres d'avancement (16) par rapport aux dispositifs de réception (17) des barres d'avancement (16) prévues dans le plan de retour (15).

8. Dispositif selon la revendication 6 ou 7, caractérisé en ce que les dispositifs de réception sont réalisés en tant qu'évidements (17).

9. Dispositif selon l'une des revendications 5 à 8, caractérisé en ce que des dispositifs d'arrêt (27) sont prévus qui arrêtent les barres à pinces (9) lorsque celles-ci ne sont plus en prise avec les barres d'avancement (16).

10. Dispositif selon la revendication 9, caractérisé en ce que les dispositifs d'arrêt présentent des boulons d'indexation (27) autour desquels les barres à pinces (9) peuvent basculer dans une mesure prédéfinie.

11. Dispositif selon l'une des revendications 5 à 10, caractérisé en ce que les barres d'avancement (16) sont montées de manière à pivoter autour de leurs axes longitudinaux (23), et en ce que les barres à pinces (9) sont assemblées avec les barres d'avancement (16) ou détachées de celles-ci en pivotant.

12. Dispositif selon l'une des revendications 8 à 11, caractérisé en ce que les barres d'avancement (16) vues en coupe transversale ont un profil d'hélice avec deux pales individuelles opposées (24a, 24b), et en ce que dans les pales (24a) prévues d'un côté des barres d'avancement (16) sont prévus les évidements (17) destinés à recevoir les zones d'extrémité frontale (18) des barres à pinces (9), et en ce que dans les pales (24b) prévues de l'autre côté est prévu au moins un évidement (25) pour y enclencher un élément d'entraînement (26) pour le mouvement longitudinal des barres d'avancement
